# EUROPÄISCHE PATENTSCHRIFT

(11) **EP 4 390 447 B1**
(45) Veröffentlichungstag und Bekanntmachung des Hinweises auf die Patenterteilung: **01.10.2025**
(21) Anmeldenummer: 23210385.3
(22) Anmeldetag: 16.11.2023
(51) Int. Cl.: G01S 7/497, G01S 7/481, G01S 17/04

(54) **OPTOELEKTRONISCHER SENSOR UND VERFAHREN ZUR HERSTELLUNG EINES OPTOELEKTRONISCHEN SENSORS**
OPTOELECTRONIC SENSOR AND METHOD FOR PRODUCING AN OPTOELECTRONIC SENSOR
CAPTEUR OPTOÉLECTRONIQUE ET PROCÉDÉ DE FABRICATION D'UN CAPTEUR OPTOÉLECTRONIQUE

(30) Priorität: 20.12.2022 DE 102022134132
(43) Veröffentlichungstag der Anmeldung: 26.06.2024
(73) Patentinhaber: SICK AG, 79183 Waldkirch (DE)
(72) Erfinder: Wülker, Fabian Tobias, 77793 Gutach (DE)

(56) Entgegenhaltungen:
- DE-A1- 102007 050 096
- DE-A1- 102011 089 866
- DE-A1- 102015 121 840
- US-A1- 2016 238 443

## Beschreibung

Die vorliegende Erfindung betrifft einen optoelektronischen Sensor gemäß dem Oberbegriff von Anspruch 1 sowie ein Verfahren zur Herstellung eines optoelektronischen Sensors jeweils nach den Ansprüchen 12 und 13.

Optoelektronische Sensoren werden für eine Vielzahl von Überwachungsaufgaben eingesetzt. Beispiele solcher Sensoren sind Lichttaster oder Reflexionslichtschranken, bei denen ein Lichtsender einen Lichtstrahl aussendet, der reflektiert und von einem neben dem Lichtsender angeordneten Lichtempfänger aufgefangen wird. Ein anderer Sensortyp ist ein Lichtgitter, bei dem eine Reihe von Lichtsender/Lichtempfängerpaaren nebeneinander angeordnet sind und eine Art Lichtvorhang bilden.

Eine weitere Anwendung der genannten Sensoren ist die optische Bestimmung einer Entfernung nach dem Prinzip des Lichtlaufzeitverfahrens. Ein Lichtstrahl mit einem Sendemuster wird von einem Objekt reflektiert und nach Empfang in dem Sensor mit einem intern erzeugten Referenzmuster verglichen. Daraus lässt sich der Lichtweg und damit auch der Abstand errechnen. In der Praxis werden im Wesentlichen zwei Verfahren angewandt. Bei dem einen Verfahren ist das Sendemuster ein einfacher Lichtpuls, dessen Laufzeit gemessen wird. Bei dem anderen Verfahren ist das Sendemuster eine Sinusmodulation, wobei die Phasenlage des Sinus gegenüber einem Referenzsinus modulo der Periode des Sinus der Laufzeit entspricht.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine entfernungsmessende Reflexionslichtschranke, bei welcher der Abstand zwischen Lichtsender und Reflektor überwacht wird.

Bei allen genannten Sensoren ist dem Lichtsender und dem Lichtempfänger jeweils eine Optik zugeordnet, und diese Optik muss richtig justiert sein. Besonders bei Abstandsmessungen mit einem Laser als Lichtsender wird herkömmlich eine Justage im Produktionsumfeld durchgeführt. Dies soll eine bestimmte Fokuslage oder einen Laserspotdurchmesser einstellen. Zusätzlich kann es in einem zweiten Schritt erforderlich sein, den Sender und den Empfänger zueinander auszurichten. Im Ergebnis soll diese Justierung in allen Fällen die Lage von Lichtsender, Lichtempfänger und den beiden Linsen untereinander festlegen.

Solange der Lichtempfänger und/oder der Lichtspot verhältnismäßig groß ist, muss auch die Justierung nicht allzu genau sein. Mit zunehmender Miniaturisierung werden die Anforderungen an die Justierung aber erhöht. Das im Stand der Technik übliche Verfahren, den Empfänger als Chip auf eine Platine aufzusetzen, wird dann irgendwann zu ungenau.

In jedem Fall ist die Herstellung oder, wenn die Justierung erst im Produktionsumfeld durchgeführt wird, die Montage aufwändig, kostentreibend, unkomfortabel und kann, wenn der Sensor sich gar nicht mehr richtig justieren lässt, auch zu Ausschuss führen.

Beispielsweise müssen mehrere Bauteile getrennt gefügt werden, wodurch erhöhte Fertigungskosten entstehen. Eine Wahrscheinlichkeit für Montagefehler ist bei mehreren Bauteilen deutlich höher als bei einem einzigen Bauteil.

Einzelne optische Bauteile haben Positionstoleranzen zueinander, wodurch die Performance der Gesamtbaugruppe schlecht ist.

Die DE 10 2007 050 096 A1 offenbart einen optischen Sensor. Dieser umfasst eine Lichtquelle und Mittel zum Homogenisieren des von der Lichtquelle erzeugten Lichtstrahls. Mehrere optische Elemente mit unterschiedlichen Fokaldistanzen bewirken eine Homogenisierung des Lichtstrahls in seiner Ausbreitungsrichtung. Zur Homogenisierung des Lichtstrahls quer zu dessen Ausbreitungsrichtung werden mehrere nebeneinander angeordnete optische Elemente mit alternierenden Brennweiten oder Breiten verwendet. Diese sind vorzugsweise als Array an einer Frontscheibe ausgebildet.

Die DE 10 2015 121 840 A1 offenbart einen optoelektronischen Sensor zur Erfassung eines Objekts in einem Überwachungsbereich mit mindestens einem Lichtsender zum Aussenden mehrerer voneinander separierter Lichtstrahlen, einem Lichtempfänger mit mehreren Lichtempfangselementen zum Erzeugen je eines Empfangssignals aus den an dem Objekt remittierten Lichtstrahlen, einer dem Lichtempfänger vorgeordneten Empfangsoptik und einer Auswertungseinheit zur Gewinnung von Informationen über das Objekt aus den Empfangssignalen angegeben. Dabei weisen zumindest einige der Lichtempfangselemente in einer Richtung senkrecht zu ihrer Empfangsfläche einen gegenseitigen Versatz auf.

Die DE 10 2011 089 866 A1 offenbart eine Messeinrichtung zur Messung einer Distanz zu einem Zielobjekt, aufweisend eine Strahlquelle, die als elektrooptische Komponente ausgebildet ist und einen Sendestrahl aussendet, einen Detektor, der als weitere elektro-optische Komponente ausgebildet ist und einen vom Zielobjekt reflektierten und/oder gestreuten Empfangsstrahl empfängt, eine Strahlteilungsoptik zum Umlenken des Sende- und/oder Empfangsstrahls und/oder eine Strahlformungsoptik zum Formen des Sende- und/oder Empfangsstrahls und einen Optikträger zur Aufnahme der elektro-optischen Komponenten und zur Aufnahme der Strahlteilungsoptik und/oder der Strahlformungsoptik, wobei der Optikträger einen ersten Wafer zur Aufnahme der elektro-optischen Komponenten und einen zweiten Wafer zur Aufnahme der Strahlteilungsoptik und/oder der Strahlformungsoptik aufweist.

Die US 2016/0238443 A1 offenbart ein optisches Sensormodul, ein optisches Sensorzubehör und ein optisches Sensorgerät. Ein optisches Sensormodul besteht aus einer Lichtquelle, einem Fotodetektor und einem Substrat. Die Lichtquelle ist so konfiguriert, dass sie elektrische Energie in Strahlungsenergie umwandelt und Licht auf eine Objektoberfläche abgibt. Der Fotodetektor ist so konfiguriert, dass er das Licht von einer Objektoberfläche empfängt und Strahlungsenergie in elektrischen Strom oder Spannung umwandelt. Ein optisches Sensorzubehör und ein optisches Sensorgerät umfassen das optische Sensormodul und andere elektronische Module für weitere Anwendungen.

Es ist daher Aufgabe der Erfindung, einen optoelektronischen Sensor bereitzustellen, der einen möglichst geringen Justageaufwand erfordert und außerdem ein vereinfachtes Herstellungsverfahren für einen richtig justierten Sensor anzugeben.

Die Aufgabe wird gemäß Anspruch 1 gelöst durch einen optoelektronischer Sensor zur Objektdetektion, mit einem Sensorgehäuse, mit mindestens einer Leiterplatte, mit einem Lichtsender und einem hierzu in einem Abstand angeordneten Lichtempfänger, wobei der Lichtsender und der Lichtempfänger auf der Leiterplatte angeordnet sind, sowie mit mindestens einer ersten Linse, die dem Lichtsender vorgeordnet ist und mit mindestens einer zweiten Linse, die dem Lichtempfänger vorgeordnet ist, wobei die erste Linse und die zweite Linse in einem einstückigen optischen Kombinationselement integriert sind, wobei das optische Kombinationselement mindestens eine Senderblende und mindestens eine Empfängerblende aufweist.

Der erfindungsgemäße optoelektronische Sensor mit dem einstückigen optischen Kombinationselement führt zu dem Vorteil, dass die Basisabstände zwischen Lichtsender und Lichtempfänger einerseits und zwischen den beiden zugeordneten Linsen andererseits festgelegt sind. Es ist damit ein einfacher optoelektronische Sensor angegeben, der bereits zueinander justierte Komponenten aufweist.

Da die optischen Bauteile in einem Teil, nämlich dem optischen Kombinationselement, realisiert sind, sind die Positionstoleranzen zwischen den optischen Funktionselementen deutlich geringer als bei einzelnen optischen Elementen, wodurch die Sensorperformance verbessert werden kann.

Die Anzahl der optischen Bauteile wird stark reduziert, wodurch die Teile- und Montagekosten deutlich reduziert werden.

Die Wahrscheinlichkeit für Montagefehler ist bei einer geringeren Anzahl von Bauteilen geringer. Außerdem ist die Gefahr geringer, dass Bauteile bei der Montage vergessen werden.

Die erste Linse und/oder die zweite Linse sind vorzugweise als refraktive Optiken ausgebildet. Dabei sind die erste Linse und/oder die zweite Linse vorzugsweise als Sammellinsen ausgebildet.

Dadurch dass die Blenden, also die Senderblende und die Empfängerblende mit in das optische Kombinationselement integriert sind, sind diese genauer zu den Linsen, also der ersten Linse und der zweiten Linse positioniert, wodurch diese aufgrund geringerer Toleranzen besser in Bezug auf deren Performance dimensioniert werden können.

Die Senderblende oder Empfängerblende begrenzt den Querschnitt von Strahlbündeln. Dabei wird Öffnungsweite bzw. Apertur des Lichtsenders bzw. des Lichtempfängers durch die Senderblende bzw. die Empfängerblende begrenzt. Dadurch dass die Senderblende und Empfängerblende auf dem optischen Kombinationselement angeordnet sind, kann die Senderblende sehr präzise zum Lichtsender und die Empfängerblende sehr präzise zum Lichtempfänger angeordnet werden. Dadurch wird die Güte und Qualität des optischen Kombinationselements und damit des optoelektronischen Sensors verbessert.

Auf der Leiterplatte befindet sich vorzugsweise eine Steuer- und Auswerteeinheit. Mittels der Steuer- und Auswerteeinheit kann der Lichtsender angesteuert werden und der Lichtempfänger ausgewertet werden. Die Steuer- und Auswerteeinheit ist beispielsweise durch einen Mikrocontroller oder einen Mikroprozessor gebildet. Es kann jedoch auch vorgesehen sein, dass ein FPGA oder ASIC vorgesehen ist als Steuer- und Auswerteeinheit.

In Weiterbildung der Erfindung weist das optische Kombinationselement mindestens ein diffraktives optisches Element auf.

Das optische Kombinationselement kann dabei ein oder mehrere diffraktive optische Elemente aufweisen.

Diffraktive optische Elemente sind Elemente die Mikrostrukturen aufweisen. In den Mikrostrukturen kommt es durch unterschiedliche optische Weglängen der Teilstrahlen zu Phasenmodulationen, wodurch Interferenzmuster entstehen. Zusätzlich wird durch konstruktive und destruktive Überlagerung die Amplitude moduliert. So lassen sich durch geschickte Auslegung die Intensitätsmuster in einem Lichtstrahl insbesondere Laserstrahl manipulieren. Durch ein diffraktiv optisches Element kann vorzugsweise eine Lichtbündelung ähnlich einer refraktiven Linse gebildet werden.

Die Mikrostruktur im diffraktiv optischen Element kann den Strahl beispielsweise durch den Brechungsindex oder durch Höhenmodulation formen. Dabei können Wirkungsgrade von 80-99 % und Transmissionsgrade von 95-99 % erreicht werden.

Beispielsweise bildet das diffraktive optische Element zusammen mit der ersten Linse und/oder der zweiten Linse ein optisches System.

In Weiterbildung der Erfindung ist die erste Linse und/oder die zweite Linse als diffraktives optisches Element ausgebildet.

Dadurch kann das optische Kombinationselement sehr kompakt ausgebildet werden, da die refraktiven Flächen minimiert oder gar ganz eliminiert werden. Dadurch kann der optoelektronische Sensor selbst miniaturisiert werden.

In Weiterbildung der Erfindung weist das optische Kombinationselement mindestens einen Bandpassfilter auf.

Als Bandpass (auch Bandbreitenfilter) wird in der Optik ein Filter bezeichnet, das nur Signale eines Frequenzbands passieren lässt. Die Frequenzbereiche unterhalb und oberhalb des Durchlassbereiches werden dabei gesperrt oder deutlich abgeschwächt. Es handelt sich dabei um ein optischen Bandpassfilter.

Bandpässe für optische Wellenlängen sind beispielsweise Farbfilter. Sie bestehen beispielsweise aus Interferenzfiltern und können sehr schmalbandig ausgeführt werden. Insbesondere kann das Bandpassfilter durchlässig sein für Rotlicht oder Infrarotlicht. Insbesondere kann das Bandpassfilter durchlässig sein für rotes oder infrarotes Laserlicht.

In Weiterbildung der Erfindung bildet das optische Kombinationselement eine Frontscheibe des optoelektronischen Sensors, wobei die Frontscheibe einen Teil einer Außenfläche des Sensorgehäuses bildet.

Gemäß der Weiterbildung wird die Frontscheibe als ein Teil des Kombinationselements umgesetzt, wodurch weiterer Bauraum eingespart wird und die Anzahl der Einzelteile weiter reduziert wird.

Da die Frontscheibe dabei einen Teil einer Außenfläche des Sensorgehäuses bildet, ist die Frontscheibe hierzu an der Außenseite vorzugsweise eben und glatt ausgebildet. Die Frontscheibe kann hierzu aus Glas oder Kunststoff ausgebildet sein. Die Außenseite der Frontscheibe kann hierzu beispielsweise kratzfest und/oder schlagfest ausgebildet sein. Insbesondere kann die Außenseite der Frontscheibe eine hohe chemische Beständigkeit aufweisen.

In Weiterbildung der Erfindung sind zwischen dem optischen Kombinationselement und mindestens einer der Leiterplatten Positionierelemente angeordnet, um das optische Element auf der Leiterplatte bzw. den Leiterplatten zu positionieren und zu fixieren. Die Positionierelemente können dabei vorzugsweise einstückig mit dem optischen Kombinationselement verbunden sein. Jedoch kann es auch vorgesehen sein, dass die Positionierelemente einstückig mit der Leiterplatte verbunden sind. Beispielsweise können die Positionierelemente durch einfache Zapfen oder Abstandshalter gebildet sein.

Mit den Positionierelementen wird eine Position in mindestens drei senkrecht zueinander stehenden Raumrichtungen festgelegt. Dabei wird auch eine Fixierung in drei Raumwinkeln festgelegt. Die Positionierelemente sind vorzugsweise aus Kunststoff gebildet.

Insbesondere weist das optische Kombinationselement und die Leiterplatte einen ähnlichen Temperaturkoeffizienten auf.

In Weiterbildung der Erfindung ist zwischen dem optischen Kombinationselement und der Leiterplatte ein Optikträger angeordnet, um das optische Element auf der Leiterplatte zu positionieren und zu fixieren.

Mit dem Optikträger wird eine Position in mindestens drei senkrecht zueinander stehenden Raumrichtungen festgelegt. Dabei wird auch eine Fixierung in drei Raumwinkeln festgelegt. Der Optikträger ist vorzugsweise aus Kunststoff gebildet. Der Optikträger kann beispielsweise einen Tubus bilden. Vorzugweise ist der Optikträger aus schwarzem Kunststoff gebildet. Insbesondere weist der Optikträger schwarze matte Oberflächen auf, so dass Störlicht oder Streulicht absorbiert wird.

In Weiterbildung der Erfindung weist das optische Kombinationselement eine Antireflex-, eine Antikratz- und/oder eine Antibeschlagbeschichtung auf.

Durch die Antikratzbeschichtung ist das optische Kombinationselement robust gegenüber mechanischen Einwirkungen. Durch die Antireflexbeschichtung ist das optische Kombinationselement und dadurch der optoelektronische Sensor robuster gegenüber optischem Störlicht. Durch die Antibeschlagbeschichtung ist das optische Kombinationselement und dadurch der optoelektronische Sensor robuster bei Temperaturwechseln. So kann der Sensor besser in Außenbereichen und bei großen Temperaturunterschieden betrieben werden.

In Weiterbildung der Erfindung weist das optische Kombinationselement optische Mikrostrukturen auf. Die optischen Mikrostrukturen sind geometrische Strukturen im Mikrometerbereich. Dabei kann es sich um Mikrolinsen oder Ähnliches handeln. Es können beispielsweise Mikroprismen vorgesehen werden. Dadurch können optische Komponenten, wie beispielsweise die erste Linse oder die zweite Linse als optische Mikrolinsen ausgebildet sein. Jedoch können auch zusätzliche optische Elemente als Mikrostrukturelemente ausgebildet sein. Die optischen Mikrostrukturen sind beispielsweise einstückig mit dem optischen Kombinationselement verbunden.

In Weiterbildung der Erfindung weist das optische Kombinationselement mechanische Mikrostrukturen auf. Die mechanischen Mikrostrukturen sind geometrische Strukturen im Mikrometerbereich. Beispielsweise können Positionierelemente, Fixierelemente, Lagerelemente oder auch statische Elemente als mechanische Mikrostrukturen gebildet sein. Die mechanischen Mikrostrukturen sind beispielsweise einstückig mit dem optischen Kombinationselement verbunden.

In Weiterbildung der Erfindung weist das optische Kombinationselement optische Trennmittel auf zur optischen Trennung von Sende- und Empfangspfad.

Damit wird verhindert, dass Störlicht vom Lichtsender direkt in den Lichtempfänger gelangt und dort empfangen werden kann. Durch die Trennmittel wird der optische Sendepfad vom optischen Empfangspfad optisch getrennt.

Die optischen Trennmittel können beispielsweise als optische Trennschichten, als optische Trennstege oder Aussparungen ausgebildet sein. Optische Trennschichten sind beispielsweise aus lichtundurchlässigem Material, beispielsweise schwarzem Kunststoff gebildet. Optische Trennstege sind beispielsweise so dünn oder geometrisch so geformt, dass die Trennstege eine optische Barriere bilden. Eine Aussparung ist beispielweise eine Spalte im Material des Kombinationselements, über die eine optische Wellenausbreitung erschwert wird.

In Weiterbildung der Erfindung sind erste Linse und/oder die zweite Linse Fresnellinsen.

Fresnellinsen haben eine besonders geringe Bauhöhe, wodurch Bauraum eingespart werden kann.

Erfindungsgemäß weist das optische Kombinationselement (8) mindestens einen Bandpassfilter (12) auf, wobei das optische Kombinationselement (8) aus mehreren Schichten (19) aufgebaut ist und unterschiedliche Schichten (19) unterschiedliche Komponenten aufweisen, wobei eine Schicht die Senderblende (9) und die Empfängerblende (10) aufweist und eine davon verschiedene Schicht das Bandpassfilter (12) aufweist.

In Weiterbildung der Erfindung ist das optische Kombinationselement mittels Spritzguss hergestellt.

Mit diesem Verfahren lassen sich direkt optische Kombinationselemente in großer Stückzahl kostengünstig herstellen. Die Kosten für das Werkzeug machen einen großen Teil der notwendigen Investitionen aus.

Das Spritzgießen, insbesondere erweiterte spezielle Verfahren, erlaubt eine nahezu freie Wahl von Form und Oberflächenstruktur wie z. B. glatte Oberflächen oder Linsen. Das Spritzgießen oft auch als Spritzguss oder Spritzgussverfahren bezeichnet ist ein Urformverfahren, das hauptsächlich in der Kunststoffverarbeitung eingesetzt wird. Dabei wird mit einer Spritzgießmaschine der jeweilige Werkstoff verflüssigt (plastifiziert) und in eine Form, dem Spritzgießwerkzeug, unter Druck eingespritzt. Im Werkzeug geht der Werkstoff durch Abkühlung oder eine Vernetzungsreaktion wieder in den festen Zustand über und wird nach dem Öffnen des Werkzeuges als Fertigteil entnommen. Der Hohlraum und die Kavität des Werkzeuges bestimmen dabei die Form und die Oberflächenstruktur des optischen Kombinationselements.

In Weiterbildung der Erfindung ist das optische Kombinationselement mittels einem Nanoimprint-Lithographieverfahren bzw. Nanodruck-Lithographieverfahren (engl. nanoimprint litography, Abkürzung; NIL) hergestellt.

Eine Herstellung im NIL (nanoimprint litography) Verfahren reduziert die Bauteilkosten deutlich, da auf großen Substraten mehrere Bauteile gleichzeitig hergestellt und nachfolgend vereinzelt werden können.

Insbesondere können Fresnellinsen im NIL-Verfahren hergestellt werden. Diese sind vor allem im NIL Verfahren gegenüber Spritzguss in deutlich höherer Qualität realisierbar.

Das Nanodruck-Lithographieverfahren ist ein Verfahren zur Herstellung von Mustern im Nanometerbereich unter Verwendung eines speziellen Stempels.

Es ist ein einfaches Nanolithographieverfahren mit geringen Kosten, hohem Durchsatz und hoher Auflösung. Es erzeugt Muster durch mechanische Verformung des Abdrucklacks und nachfolgender Prozesse. Der Abdrucklack ist typischerweise eine Monomer- oder Polymerformulierung, die während des Abdrucks durch Wärme oder UV-Licht gehärtet wird. Die Haftung zwischen dem Lack und der Schablone wird kontrolliert, um eine ordnungsgemäße Freigabe zu ermöglichen.

Insbesondere kann vorgesehen sein, dass der Oberflächenstrukturierungsschritt mittels Nanoprägelithographie erfolgt. Die Nanopräge-Lithographie, häufig auch als Nanoimprint-Litographie, NIL oder Nanoimprint bezeichnet, ist ein Prägeverfahren, welches zum Herstellen von Nanostrukturen verwendet werden kann. Hierbei ist ein Stempel mit dem Negativ erforderlich, welcher seinerseits mittels Nanopräge-Llithographie oder einem anderen Nanostrukturierungsverfahren hergestellt werden kann. Der Stempel wird beim Oberflächenstrukturierungsschritt in ein Positiv gedrückt, wobei dem Positiv das Relief des Stempels eingeprägt wird. Das Positiv kann insbesondere aus Kunststoff, bevorzugt Monomere oder Polymere, sein. Der Stempel wird erst nach einem Aushärten des Positivs entfernt. Das Aushärten kann insbesondere mittels UV-Strahlung erfolgen. Bei der Verwendung von Kunststoff als Substrat kann das Positiv unmittelbar das Substrat sein. Alternativ kann das Positiv anschließend weggeätzt werden, wobei das Positiv eine Ätzmaske für das darunterliegende Material, insbesondere ein Substrat aus Glas oder eine Beschichtung, darstellt. Durch den Stempel sind die zu erzeugenden Oberflächenreliefs besonders gut vorgebbar und mit geringen Toleranzen herstellbar. Weiters erlaubt es die Nanopräge-Lithographie Oberflächenreliefs zu erzeugen, welche einen besonders steilen Übergang zwischen einzelnen Erhebungen und Vertiefungen erlauben.

Es gibt viele verschiedene Arten der Nanoimprint-Lithographie, von denen jedoch drei am wichtigsten sind: Thermoplastische Nanoimprint-Lithographie, Photo-Nanoimprint-Lithographie und lackfreie direkte thermische Nanoimprint-Lithographie.

### Thermoplastische Nanoimprint-Lithographie:

Die thermoplastische Nanoimprint-Lithographie (T-NIL) ist die früheste Nanoimprint-Lithographie. Bei einem Standard-T-NIL-Verfahren wird eine dünne Schicht eines Abdrucklacks (thermoplastisches Polymer) auf das Probensubstrat schleuderbeschichtet. Dann wird die Form, die vordefinierte topologische Muster aufweist, mit der Probe in Kontakt gebracht und sie werden unter einem bestimmten Druck zusammengepresst. Beim Erhitzen über die Glasübergangstemperatur des Polymers wird das Muster auf der Form in den erweichten Polymerfilm gedrückt. Nach dem Abkühlen wird die Form von der Probe getrennt und der Musterlack auf dem Substrat belassen. Ein Musterübertragungsprozess (normalerweise reaktives Ionenätzen) kann verwendet werden, um das Muster auf das darunter liegende Substrat zu übertragen.

Alternativ könnte das Kaltschweißen zwischen zwei Metalloberflächen auch niedrigdimensionales nanostrukturiertes Metall ohne Erwärmung übertragen (insbesondere für kritische Größen von weniger als ca. 10 nm). Durch Wiederholen dieses Vorgangs können dreidimensionale Strukturen hergestellt werden. Der Kaltschweißansatz hat den Vorteil, dass eine Verunreinigung oder ein Defekt des Oberflächenkontakts ohne Erwärmungsprozess reduziert wird.

### Photo-Nanoimprint-Lithographie:

Bei der Photo-Nanoimprint-Lithographie (P-NIL) wird ein durch UV-Licht härtbarer Flüssigkeitslack auf das Probensubstrat aufgebracht. Die Form besteht normalerweise aus transparentem Material wie Quarzglas oder PDMS. Nachdem die Form und das Substrat zusammengepresst wurden, wird der Lack in UV-Licht gehärtet und wird fest. Nach der Formtrennung kann ein ähnlicher Musterübertragungsprozess verwendet werden, um das Lackmuster auf das darunter liegende Material zu übertragen.

### Lackfreie direkte thermische Nanoimprint-Lithographie:

Anders als bei den oben genannten Nanoimprint-Verfahren erfordert die lackfreie direkte thermische Nanoimprint-Lithographie keinen zusätzlichen Ätzschritt, um Muster von Aufdrucklacken auf die Vorrichtungsschicht zu übertragen.

In einem typischen Prozess werden Photolackmuster zuerst unter Verwendung von Photolithografie definiert. Anschließend wird aus den Lackmustern ein Polydimethylsiloxan (PDMS) Elastastempel nachgebildet. Ferner formt ein einstufiger Nanoimprint Dünnfilmmaterialien unter Druck bei erhöhten Temperaturen direkt in gewünschte Vorrichtungsgeometrien. Die bedruckten Materialien sollten geeignete Erweichungseigenschaften aufweisen, um das Muster aufzufüllen. Amorphe Halbleiter (zum Beispiel Chalkogenidglas) mit hohem Brechungsindex und breitem transparentem Fenster sind ideale Materialien für den Abdruck von optischen Bestandteilen für das optische Kombinationselement.

Ein Hauptvorteil der Nanoimprint-Lithographie ist seine Einfachheit. Bei einem Nanoimprint-Tool sind keine komplexen Optiken oder energiereichen Strahlungsquellen erforderlich. Es sind keine fein abgestimmten Fotolacke erforderlich, die sowohl für die Auflösung als auch für die Empfindlichkeit bei einer bestimmten Wellenlänge ausgelegt sind. Die vereinfachten Anforderungen der Technologie führen zu geringen Kosten.

Masterformen können bis zu einigen tausend bis zehntausend Abdrücken verwendet werden.

Die Abdrucklithographie ist von Natur aus ein dreidimensionaler Strukturierungsprozess. Abdruckformen können mit mehreren vertikal gestapelten Topografieschichten hergestellt werden. Die resultierenden Aufdrucke replizieren beide Schichten mit einem einzigen Aufdruckschritt. Wie oben erwähnt, muss das Druckmaterial für eine hohe Auflösung und Empfindlichkeit nicht fein abgestimmt werden. Für die Verwendung mit der Abdrucklithographie steht eine breitere Palette von Materialien mit unterschiedlichen Eigenschaften zur Verfügung. Die erhöhte Materialvariabilität gibt Chemikern die Freiheit, neue funktionelle Materialien anstelle von opferätzbeständigen Polymeren zu entwickeln. Ein Funktionsmaterial kann direkt aufgedruckt werden, um eine Schicht zu bilden, ohne dass eine Musterübertragung in darunter liegende Materialien erforderlich ist.

In Weiterbildung der Erfindung wird aufgrund einer Abbildung des Sendelichts das optische Kombinationselement zur Leiterplatte justiert und ausgerichtet.

Durch geringe Toleranzen innerhalb des optischen Kombinationselements bzw. Integralbauteils und innerhalb der Leiterplatten-Bestückung reicht eine Justage aufgrund einer Abbildung des Sendelichts aus, um Sende- und Empfangspfad zu justieren.

Durch die Justage anhand des Sendelichpfads mithilfe von z.B. der Abbildungsüberprüfung auf einer Mattscheibe wird der Empfangspfad mit justiert, wodurch keine aufwändige Justage des Empfängers mit Auswertung des Empfangselements nötig ist.

In Weiterbildung der Erfindung werden eine Vielzahl von optischen Kombinationselementen in einem einzigen Substrat hergestellt und anschließend vereinzelt.

Dadurch kann eine sehr kostengünstige Herstellung einer Vielzahl von optischen Kombinationselementen erfolgen.

In Weiterbildung der Erfindung wird die Vereinzelung mittels einem Lasertrennverfahren durchgeführt.

Eine Vereinzelung mittels Lasertrennverfahren hat den Vorteil, dass diese rückstandsfrei erfolgen kann. Es fallen also keine Späne oder sonstigen Abfallprodukte bei der Trennung an, wie das bei mechanischen Trennverfahren beispielsweise teilweise der Fall sein kann. Weiter hat ein Lasertrennverfahren den Vorteil, dass die Trennung sehr präzise und sehr genau erfolgen kann, da der Laserstrahl sehr präzise schneidet bzw. trennt.

In Weiterbildung der Erfindung hat das Substrat die Form einer CD, einer DVD, einer Blue-Ray-Disk oder einer Ultra-High-Definition-Disk. Dies hat den Vorteil, dass das Substrat eine gängige Größe hat und daher übliche Maschinen zur Verarbeitung von Substraten verwendet werden können.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1, 1a, 1b und 2: jeweils einen optoelektronischen Sensor;
- Figur 3: ein optisches Kombinationselement;
- Figur 4: einen optoelektronischen Sensor;
- Figur 5 bis Figur 10: jeweils ein optisches Kombinationselement.

In den nachfolgenden Figuren sind identische Teile mit identischen Bezugszeichen versehen.

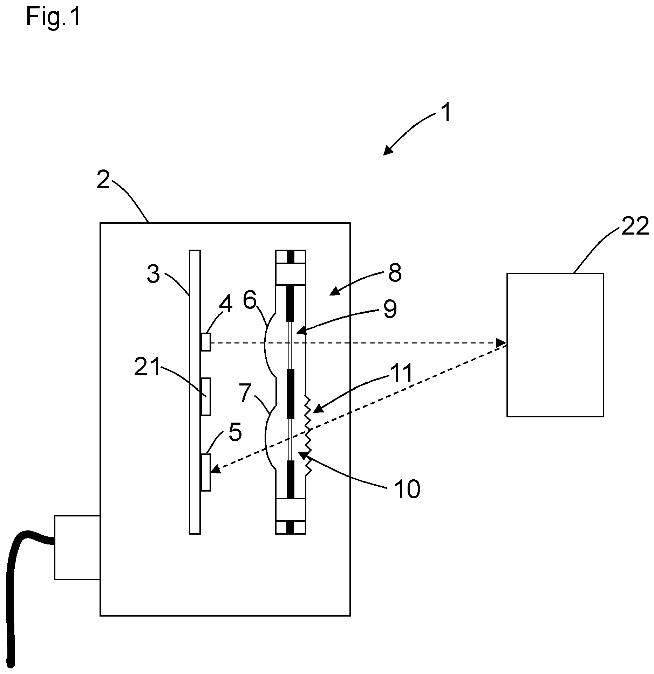

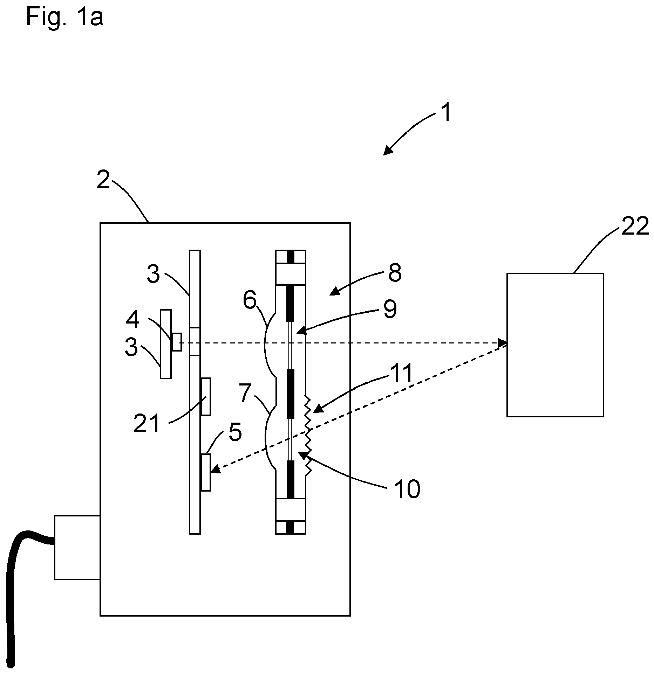

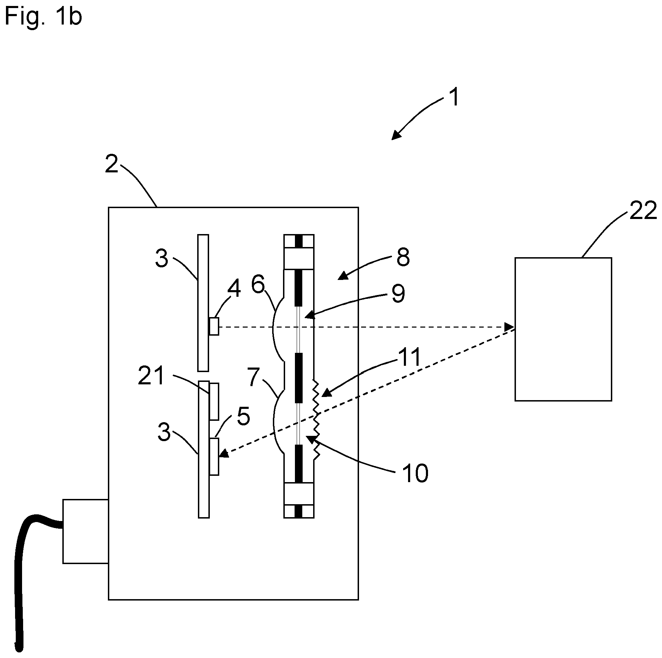

Figur 1 zeigt einen optoelektronischer Sensor 1 zur Objektdetektion eines Objektes 22, mit einem Sensorgehäuse 2, mit mindestens einer Leiterplatte 3, mit einem Lichtsender 4 und einem hierzu in einem Abstand angeordneten Lichtempfänger 5, wobei der Lichtsender 4 und der Lichtempfänger 5 auf der Leiterplatte 3 angeordnet sind, sowie mit mindestens einer ersten Linse 6, die dem Lichtsender 4 vorgeordnet ist und mit mindestens einer zweiten Linse 7, die dem Lichtempfänger 5 vorgeordnet ist, wobei die erste Linse 6 und die zweite Linse 7 in einem einstückigen optischen Kombinationselement 8 integriert sind, wobei das optische Kombinationselement 8 eine Senderblende 9 und eine Empfängerblende 10 aufweist.

Optional weist das optische Kombinationselement 8 mindestens ein diffraktives optisches Element 11 auf.

Die erste Linse 6 und/oder die zweite Linse 7 sind vorzugweise als refraktive Optiken ausgebildet. Dabei sind die erste Linse 6 und/oder die zweite Linse 7 vorzugsweise als Sammellinsen ausgebildet.

Diffraktive optische Elemente 11 sind Elemente, die Mikrostrukturen aufweisen. Beispielsweise bildet das diffraktiv optische Element 11 zusammen mit der ersten Linse 6 und/oder der zweiten Linse 7 ein optisches System.

Die Senderblende 9 oder Empfängerblende 10 begrenzen den Querschnitt von Strahlbündeln, minimieren die Ausbreitung von Streulicht und begrenzen den Einfluss von Fremdlicht auf den Empfänger 5. Dabei wird Öffnungsweite bzw. Apertur des Lichtsenders 4 bzw. des Lichtempfängers 5 durch die Senderblende 9 bzw. die Empfängerblende 10 begrenzt.

Auf der Leiterplatte 3 befindet sich vorzugsweise eine Steuer- und Auswerteeinheit 21. Mittels der Steuer- und Auswerteeinheit 21 kann der Lichtsender 4 angesteuert werden und der Lichtempfänger 5 ausgewertet werden.

Gemäß Figur 1a ist der Lichtsender 4 auf einer zweiten Leiterplatte 3 angeordnet. Auf der Leiterplatte 3 mit dem Lichtempfänger 5 ist für die Sendelichtstrahlen eine Öffnung vorgesehen. Gemäß Figur 1a sind damit zwei Leiterplatten 3 vorgesehen.

Gemäß Figur 1b ist der Lichtsender 4 auf einer zweiten Leiterplatte 3 angeordnet. Die Leiterplatte mit dem Lichtempfänger 5 ist in der gleiche Ebene angeordnet wie die Leiterplatte 3 mit dem Lichtsender. Gemäß Figur 1b sind damit zwei Leiterplatten 3 vorgesehen. Dies ist beispielsweise bei Lasersensoren von Vorteil, da beispielsweise eine getrennte Sender- oder Empfängerjustage nötig ist.

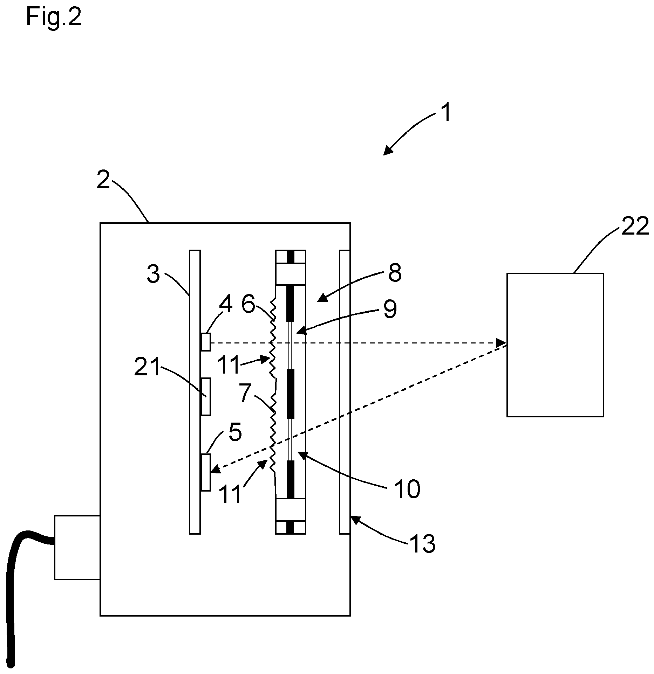

Gemäß Figur 2 ist die erste Linse 6 und/oder die zweite Linse 7 als diffraktives optisches Element 11 ausgebildet.

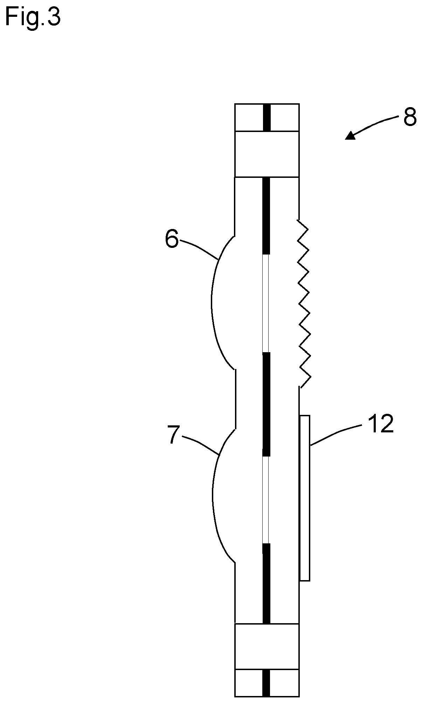

Gemäß Figur 3 weist das optische Kombinationselement 8 mindestens einen Bandpassfilter 12 auf. Es handelt sich dabei um ein optischen Bandpassfilter 12.

Bandpässe 12 für optische Wellenlängen sind beispielsweise Farbfilter. Sie bestehen beispielsweise aus Interferenzfiltern und können sehr schmalbandig ausgeführt werden. Insbesondere kann das Bandpassfilter 12 durchlässig sein für Rotlicht oder Infrarotlicht. Insbesondere kann das Bandpassfilter 12 durchlässig sein für rotes oder infrarotes Laserlicht.

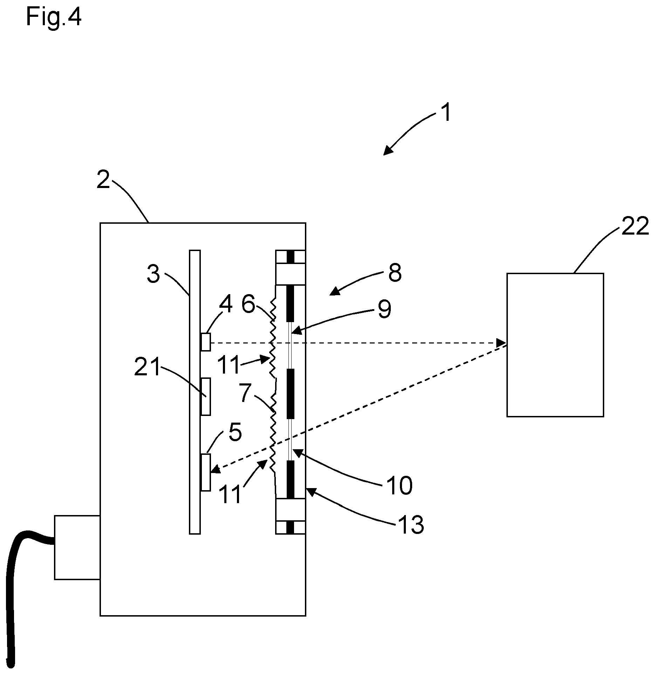

Gemäß Figur 4 bildet das optische Kombinationselement 8 eine Frontscheibe 13 des optoelektronischen Sensors 1, wobei die Frontscheibe 13 einen Teil einer Außenfläche des Sensorgehäuses 2 bildet.

Da die Fronscheibe 13 dabei einen Teil einer Außenfläche des Sensorgehäuses 2 bildet, ist die Frontscheibe 13 hierzu an der Außenseite vorzugsweise eben und glatt ausgebildet. Die Frontscheibe 13 kann hierzu aus Glas oder Kunststoff ausgebildet sein. Die Außenseite der Frontscheibe 13 kann hierzu beispielsweise kratzfest und/oder schlagfest ausgebildet sein. Insbesondere kann die Außenseite der Frontscheibe 13 eine hohe chemische Beständigkeit aufweisen.

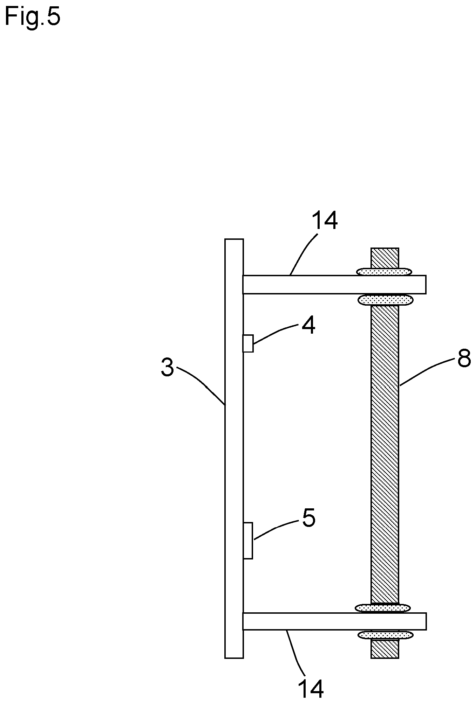

Gemäß Figur 5 sind zwischen dem optischen Kombinationselement 8 und mindestens einer der Leiterplatte 3 Positionierelemente 14 angeordnet, um das optische Kombinationselement 8 auf der Leiterplatte bzw. den Leiterplatten 3 zu positionieren und zu fixieren. Die Positionierelemente 14 können dabei vorzugsweise einstückig mit dem optischen Kombinationselement 8 verbunden sein. Jedoch kann es auch vorgesehen sein, dass die Positionierelemente 14 einstückig mit der Leiterplatte 3 verbunden sind. Beispielsweise können die Positionierelemente 14 durch einfache Zapfen oder Abstandshalter gebildet sein.

Mit den Positionierelementen 14 wird eine Position in mindestens drei senkrecht zueinander stehenden Raumrichtungen festgelegt. Dabei wird auch eine Fixierung in drei Raumwinkeln festgelegt. Die Positionierelemente 14 sind vorzugsweise aus Kunststoff gebildet.

Insbesondere weist das optische Kombinationselement 8 und die Leiterplatte 3 einen ähnlichen Temperaturkoeffizienten auf.

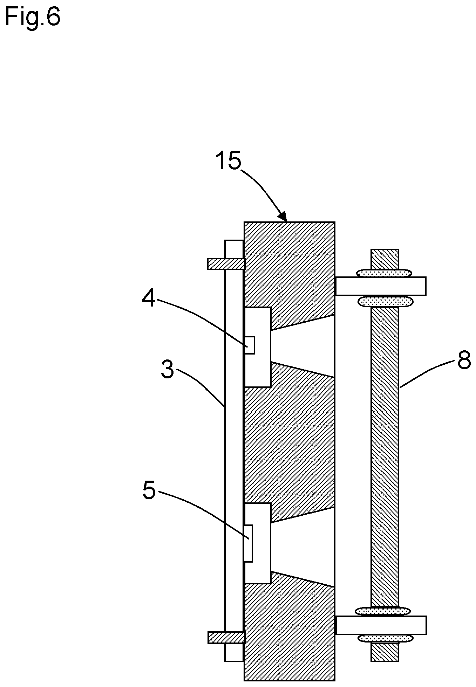

Gemäß Figur 6 ist zwischen dem optischen Kombinationselement 8 und der Leiterplatte 3 ein Optikträger 15 angeordnet, um das optische Kombinationselement 8 auf der Leiterplatte 3 zu positionieren und zu fixieren.

Mit dem Optikträger 15 wird eine Position in mindestens drei senkrecht zueinander stehenden Raumrichtungen festgelegt. Dabei wird auch eine Fixierung in drei Raumwinkeln festgelegt. Der Optikträger 15 ist vorzugsweise aus Kunststoff gebildet. Der Optikträger 15 kann beispielsweise einen Tubus bilden. Vorzugweise ist der Optikträger 15 aus schwarzem Kunststoff gebildet. Insbesondere weist der Optikträger 15 schwarze matte Oberflächen auf, so dass Störlicht oder Streulicht absorbiert wird.

Beispielsweise weist das optische Kombinationselement 8 eine Antireflex-, eine Antikratz- und/oder eine Antibeschlagbeschichtung auf.

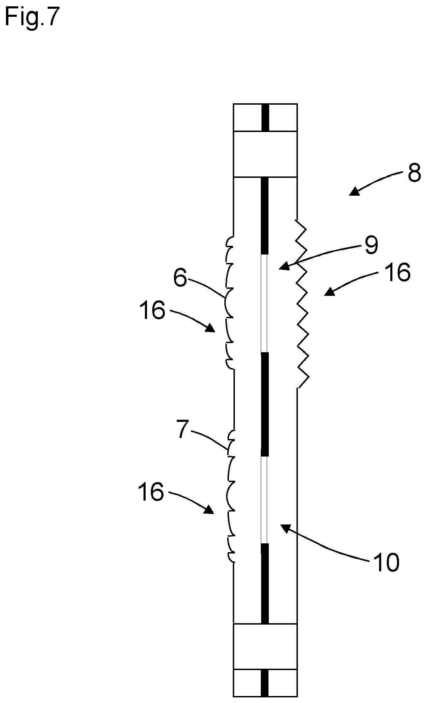

Gemäß Figur 7 weist das optische Kombinationselement 8 optische Mikrostrukturen 16 auf. Die optischen Mikrostrukturen 16 sind geometrische Strukturen im Mikrometerbereich. Dabei kann es sich um Mikrolinsen oder Ähnliches handeln. Es können beispielsweise Mikroprismen vorgesehen werden. Dadurch können optische Komponenten, wie beispielsweise die erste Linse 6 oder die zweite Linse 7 als optische Mikrolinsen ausgebildet sein. Jedoch können auch zusätzliche optische Elemente als Mikrostrukturelemente ausgebildet sein. Die optischen Mikrostrukturen 16 sind beispielsweise einstückig mit dem optischen Kombinationselement 8 verbunden.

Beispielsweise weist das optische Kombinationselement 8 mechanische Mikrostrukturen auf. Die mechanischen Mikrostrukturen sind geometrische Strukturen im Mikrometerbereich. Beispielsweise können Positionierelemente 14, Fixierelemente, Lagerelemente oder auch statische Elemente als mechanische Mikrostrukturen gebildet sein. Die mechanischen Mikrostrukturen sind beispielsweise einstückig mit dem optischen Kombinationselement 8 verbunden.

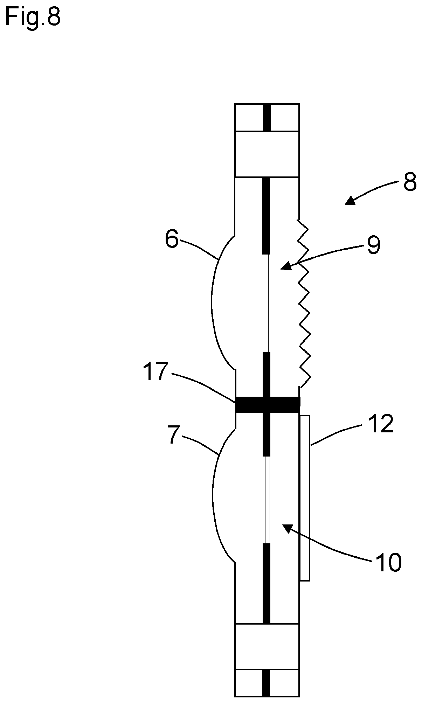

Gemäß Figur 8 weist das optische Kombinationselement 8 optische Trennmittel 17 auf zur optischen Trennung von Sende- und Empfangspfad.

Damit wird verhindert, dass Störlicht vom Lichtsender 4 direkt in den Lichtempfänger 5 gelangen und dort empfangen werden kann. Durch die Trennmittel wird der optische Sendepfad vom optischen Empfangspfad optisch getrennt.

Die optischen Trennmittel 17 können beispielsweise als optische Trennschichten oder als optische Trennstege ausgebildet sein. Optische Trennschichten sind beispielsweise aus lichtundurchlässigem Material, beispielsweise schwarzem Kunststoff gebildet. Optische Trennstege sind beispielsweise so dünn oder geometrisch so geformt, dass die Trennstege eine optische Barriere bilden.

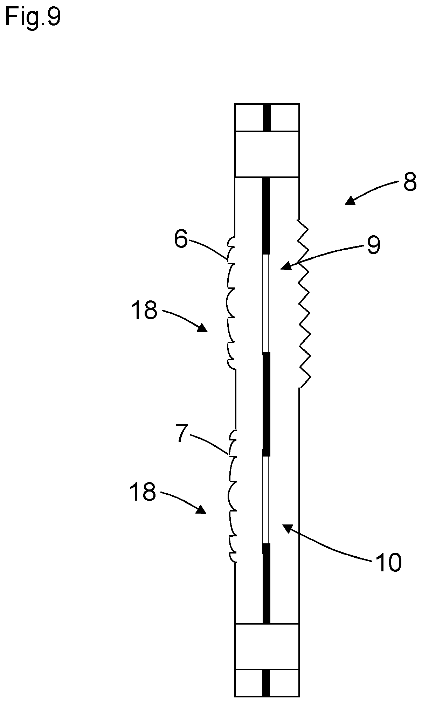

Gemäß Figur 9 sind erste Linse 6 und/oder die zweite Linse 7 Fresnellinsen 18. Fresnellinsen 18 haben eine besonders geringe Bauhöhe, wodurch Bauraum eingespart werden kann.

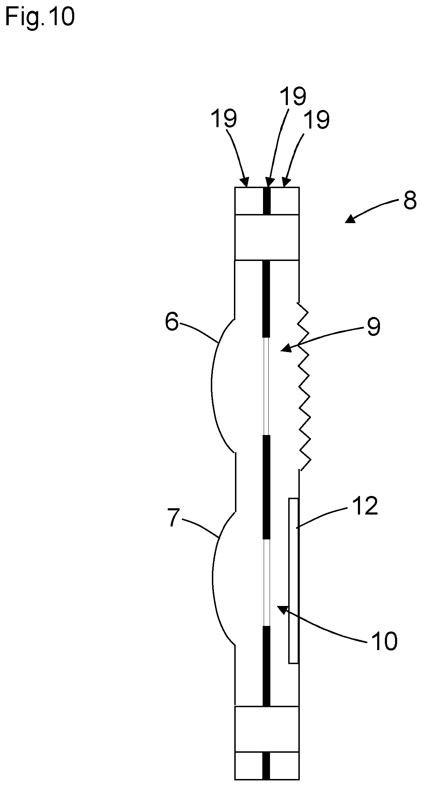

Gemäß Figur 10 ist das optische Kombinationselement 8 aus mehreren Schichten 19 aufgebaut. Beispielsweise kann eine Schicht 19 die Senderblende 9 und die Empfängerblende 10 aufweisen. Eine davon verschiedene andere Schicht 19 kann beispielsweise die erste Linse 6 bzw. die Sendelinse und die zweite Linse 7 bzw. die Empfängerlinse aufweisen. Eine davon verschiedene weitere Schicht 19 kann beispielsweise die optischen Filter aufweisen.

Beispielsweise weisen unterschiedliche Schichten 19 unterschiedliche Komponenten auf. Beispielsweise kann eine Schicht die Senderblende 9 und die Empfängerblende 10 aufweisen. Eine davon verschiedene andere Schicht 19 kann beispielsweise die erste Linse 6 bzw. die Sendelinse und die zweite Linse 7 bzw. die Empfängerlinse aufweisen. Eine davon verschiedene weitere Schicht 19 kann beispielsweise die optischen Filter aufweisen.

Beispielsweise ist das optische Kombinationselement 8 mittels Spritzguss hergestellt. Das Spritzgießen, insbesondere erweiterte spezielle Verfahren, erlaubt eine nahezu freie Wahl von Form und Oberflächenstruktur wie z. B. glatte Oberflächen oder Linsen.

Das Spritzgießen oft auch als Spritzguss oder Spritzgussverfahren bezeichnet, ist ein Urformverfahren, das hauptsächlich in der Kunststoffverarbeitung eingesetzt wird. Dabei wird mit einer Spritzgießmaschine der jeweilige Werkstoff verflüssigt (plastifiziert) und in eine Form, dem Spritzgießwerkzeug, unter Druck eingespritzt. Im Werkzeug geht der Werkstoff durch Abkühlung oder eine Vernetzungsreaktion wieder in den festen Zustand über und wird nach dem Öffnen des Werkzeuges als Fertigteil entnommen. Der Hohlraum und die Kavität, des Werkzeuges bestimmt dabei die Form und die Oberflächenstruktur des optischen Kombinationselements 8.

Beispielsweise ist das optische Kombinationselement 8 mittels einem Nanoimprint-Lithographieverfahren bzw. Nano-Druck-Lithographieverfahren (engl. nanoimprint litography, Abkürzung; NIL) hergestellt.

Nano-Druck-Lithographieverfahren ist ein Verfahren zur Herstellung von Mustern im Nanometerbereich unter Verwendung eines speziellen Stempels.

Insbesondere kann vorgesehen sein, dass der Oberflächenstrukturierungsschritt mittels Nanoprägelithographie erfolgt. Die Nanoprägelithographie, häufig auch als Nanoimprint-Litographie, NIL oder Nanoimprint bezeichnet, ist ein Prägeverfahren, welches zum Herstellen von Nanostrukturen verwendet werden kann. Hierbei ist ein Stempel mit dem Negativ erforderlich, welcher seinerseits mittels Nanopräge-Lithographie oder einem anderen Nanostrukturierungsverfahren hergestellt werden kann. Der Stempel wird beim Oberflächenstrukturierungsschritt in ein Positiv gedrückt, wobei dem Positiv das Relief des Stempels eingeprägt wird. Das Positiv kann insbesondere aus Kunststoff, bevorzugt Monomere oder Polymere, sein. Der Stempel wird erst nach einem Aushärten des Positivs entfernt. Das Aushärten kann insbesondere mittels UV-Strahlung erfolgen. Bei der Verwendung von Kunststoff als Substrat kann das Positiv unmittelbar das Substrat sein. Alternativ kann das Positiv anschließend weggeätzt werden, wobei das Positiv eine Ätzmaske für das darunterliegende Material, insbesondere ein Substrat aus Glas oder eine Beschichtung, darstellt.

Beispielsweise wird aufgrund einer Abbildung des Sendelichts das optische Kombinationselement 8 zur Leiterplatte 3 justiert und ausgerichtet.

Durch die Justage anhand des Sendelichpfads mithilfe von z.B. der Abbildungsüberprüfung auf einer Mattscheibe wird der Empfangspfad mit justiert.

Beispielsweise werden eine Vielzahl von optischen Kombinationselementen 8 in einem einzigen Substrat hergestellt und anschließend vereinzelt.

Beispielsweise wird die Vereinzelung mittels einem Lasertrennverfahren durchgeführt.

Beispielsweise hat das Substrat die Form einer CD, einer DVD, einer Blue-Ray-Disk oder einer Ultra-High-Definition-Disk.

### Bezugszeichen:

1 optoelektronischer Sensor
2 Sensorgehäuse
3 Leiterplatte
4 Lichtsender
5 Lichtempfänger
6 erste Linse
7 zweite Linse
8 optisches Kombinationselement
9 Senderblende
10 Empfängerblende
11 diffraktives optisches Element
12 Bandpassfilter
13 Frontscheibe
14 Positionierelemente
15 Optikträger
16 optische Mikrostrukturen
17 optische Trennmittel
18 Fresnellinse
19 Schichten
21 Steuer- und Auswerteeinheit

## Patentansprüche

1. Optoelektronischer Sensor (1) zur Objektdetektion, mit einem Sensorgehäuse (2), mit mindestens einer Leiterplatte (3), mit einem Lichtsender (4) und einem hierzu in einem Abstand angeordneten Lichtempfänger (5), wobei der Lichtsender (4) und der Lichtempfänger (5) auf der Leiterplatte (3) angeordnet sind, sowie mit mindestens einer ersten Linse (6), die dem Lichtsender (4) vorgeordnet ist und mit mindestens einer zweiten Linse (7), die dem Lichtempfänger (5) vorgeordnet ist, wobei die erste Linse (6) und die zweite Linse (7) in einem einstückigen optischen Kombinationselement (8) integriert sind, **dadurch gekennzeichnet, dass** das optische Kombinationselement (8) mindestens eine Senderblende (9) und mindestens eine Empfängerblende (10) aufweist, wobei das optische Kombinationselement (8) mindestens einen Bandpassfilter (12) aufweist, wobei das optische Kombinationselement (8) aus mehreren Schichten (19) aufgebaut ist und unterschiedliche Schichten (19) unterschiedliche Komponenten aufweisen, wobei eine Schicht die Senderblende (9) und die Empfängerblende (10) aufweist und eine davon verschiedene Schicht das Bandpassfilter (12) aufweist.

2. Optoelektronischer Sensor (1) nach Anspruch 1, **dadurch gekennzeichnet, dass** das optische Kombinationselement (8) mindestens ein diffraktives optisches Element (11) aufweist.

3. Optoelektronischer Sensor (1) nach Anspruch 2, **dadurch gekennzeichnet, dass** die erste Linse (6) oder die zweite Linse (7) als diffraktives optisches Element (11) ausgebildet sind.

4. Optoelektronischer Sensor (1) nach einem der vorhergehenden Ansprüche, **dadurch gekennzeichnet, dass** das optische Kombinationselement (8) eine Frontscheibe (13) des optoelektronischen Sensors (1) bildet, wobei die Frontscheibe (13) einen Teil einer Außenfläche des Sensorgehäuses (2) bildet.

5. Optoelektronischer Sensor (1) nach einem der vorhergehenden Ansprüche, **dadurch gekennzeichnet, dass** zwischen dem optischen Kombinationselement (8) und mindestens einer der Leiterplatten (3) Positionierelemente (14) angeordnet sind, um das optische Kombinationselement (8) auf der Leiterplatte bzw. den Leiterplatten (3) zu positionieren und zu fixieren.

6. Optoelektronischer Sensor (1) nach einem der vorhergehenden Ansprüche, **dadurch gekennzeichnet, dass** zwischen dem optischen Kombinationselement (8) und der Leiterplatte (3) ein Optikträger (15) angeordnet ist, um das optische Kombinationselement (8) auf der Leiterplatte (3) zu positionieren und zu fixieren.

7. Optoelektronischer Sensor (1) nach einem der vorhergehenden Ansprüche, **dadurch gekennzeichnet, dass** das optische Kombinationselement (8) eine Antireflex-, eine Antikratz- und/oder eine Antibeschlagbeschichtung aufweist.

8. Optoelektronischer Sensor (1) nach einem der vorhergehenden Ansprüche, **dadurch gekennzeichnet, dass** das optische Kombinationselement (8) optische Mikrostrukturen (16) aufweist.

9. Optoelektronischer Sensor (1) nach einem der vorhergehenden Ansprüche, **dadurch gekennzeichnet, dass** das optische Kombinationselement (8) mechanische Mikrostrukturen aufweist.

10. Optoelektronischer Sensor (1) nach einem der vorhergehenden Ansprüche, **dadurch gekennzeichnet, dass** das optische Kombinationselement (8) optische Trennmittel (17) aufweist zur optischen Trennung von Sende- und Empfangspfad.

11. Optoelektronischer Sensor (1) nach einem der vorhergehenden Ansprüche, **dadurch gekennzeichnet, dass** die erste Linse (6) und/oder die zweite Linse (7) Fresnellinsen (18) sind.

12. Verfahren zur Herstellung eines optoelektronischen Sensors (1) gemäß Anspruch 1, **dadurch gekennzeichnet, dass** das optische Kombinationselement (8) mittels Spritzguss hergestellt ist.

13. Verfahren zur Herstellung eines optoelektronischen Sensors (1) gemäß Anspruch 1, **dadurch gekennzeichnet, dass** das optische Kombinationselement (8) mittels einem Nanoimprint Lithographieverfahren hergestellt ist.

14. Verfahren nach Anspruch 12 oder 13, **dadurch gekennzeichnet, dass** aufgrund einer Abbildung des Sendelichts das optische Kombinationselement (8) zur Leiterplatte (3) justiert und ausgerichtet wird.

15. Verfahren nach Anspruch 12 oder 13, **dadurch gekennzeichnet, dass** eine Vielzahl von optischen Kombinationselementen (8) in einem einzigen Substrat hergestellt wird und anschließend vereinzelt wird.

16. Verfahren nach Anspruch 15, **dadurch gekennzeichnet, dass** die Vereinzelung mittels einem Lasertrennverfahren durchgeführt wird.

17. Verfahren nach Anspruch 15, **dadurch gekennzeichnet, dass** das Substrat die Form einer CD, einer DVD, einer Blue-Ray-Disk oder einer Ultra-High-Definition-Disk hat.

## Claims

1. An optoelectronic sensor (1) for object detection, comprising a sensor housing (2), at least one circuit board (3), a light transmitter (4) and a light receiver (5) arranged at a distance therefrom, wherein the light transmitter (4) and the light receiver (5) are arranged on the circuit board (3), and at least a first lens (6), which is arranged upstream of the light transmitter (4), and at least a second lens (7), which is arranged upstream of the light receiver (5), wherein the first lens (6) and the second lens (7) are integrated in a single-piece optical combination element (8), **characterized in that** the optical combination element (8) has at least one transmitter diaphragm (9) and at least one receiver diaphragm (10), wherein the optical combination element (8) has at least one bandpass filter (12), wherein the optical combination element (8) is composed of a plurality of layers (19) and different layers (19) have different components, wherein one layer has the transmitter diaphragm (9) and the receiver diaphragm (10) and a layer different therefrom has the bandpass filter (12).

2. An optoelectronic sensor (1) according to claim 1, **characterized in that** the optical combination element (8) has at least one diffractive optical element (11).

3. An optoelectronic sensor (1) according to claim 2, **characterized in that** the first lens (6) or the second lens (7) is configured as a diffractive optical element (11).

4. An optoelectronic sensor (1) according to any one of the preceding claims, **characterized in that** the optical combination element (8) forms a front screen (13) of the optoelectronic sensor (1), wherein the front screen (13) forms a part of an outer surface of the sensor housing (2).

5. An optoelectronic sensor (1) according to any one of the preceding claims, **characterized in that** positioning elements (14) are arranged between the optical combination element (8) and at least one of the circuit boards (3) in order to position and fix the optical combination element (8) on the circuit board or the circuit boards (3).

6. An optoelectronic sensor (1) according to any one of the preceding claims, **characterized in that** an optics carrier (15) is arranged between the optical combination element (8) and the circuit board (3) in order to position and fix the optical combination element (8) on the circuit board (3).

7. An optoelectronic sensor (1) according to any one of the preceding claims, **characterized in that** the optical combination element (8) has an anti-reflective coating, an anti-scratch coating and/or an anti-fog coating.

8. An optoelectronic sensor (1) according to any one of the preceding claims, **characterized in that** the optical combination element (9) has optical microstructures (16).

9. An optoelectronic sensor (1) according to any one of the preceding claims, **characterized in that** the optical combination element (9) has mechanical microstructures.

10. An optoelectronic sensor (1) according to any one of the preceding claims, **characterized in that** the optical combination element (8) has optical separation means (17) for optically separating the transmission path and the reception path.

11. An optoelectronic sensor (1) according to any one of the preceding claims, **characterized in that** the first lens (6) and/or the second lens (7) is/are Fresnel lenses (18).

12. A method for producing an optoelectronic sensor (1) according to claim 1, **characterized in that** the optical combination element (8) is produced by means of injection molding.

13. A method for producing an optoelectronic sensor (1) according to claim 1, **characterized in that** the optical combination element (8) is produced by means of a nanoimprint lithography method.

14. A method according to claim 12 or 13, **characterized in that** the optical combination element (8) is adjusted to and aligned with the circuit board (3) on the basis of an image of the transmission light.

15. A method according to claim 12 or 13, **characterized in that** a plurality of optical combination elements (8) are produced in a single substrate and are then separated.

16. A method according to claim 15, **characterized in that** the separation is performed by means of a laser cutting process.

17. A method according to claim 15, **characterized in that** the substrate has the form of a CD, a DVD, a blue-ray disk or an ultra-high-definition disk.

## Revendications

1. Capteur optoélectronique (1) pour la détection d'objets, comprenant un boîtier de capteur (2), au moins une carte de circuit imprimé (3), un émetteur de lumière (4) et un récepteur de lumière (5) disposé à distance de celui-ci, l'émetteur de lumière (4) et le récepteur de lumière (5) étant disposés sur la carte de circuit imprimé (3), et comprenant au moins une première lentille (6) disposée en amont de l'émetteur de lumière (4), et au moins une deuxième lentille (7) disposée en amont du récepteur de lumière (5), la première lentille (6) et deuxième lentille (7) étant intégrées dans un élément optique combiné (8) monobloc,
**caractérisé en ce que**
l'élément optique combiné (8) présente au moins un diaphragme émetteur (9) et au moins un diaphragme récepteur (10),
l'élément optique combiné (8) comprenant au moins un filtre passe-bande (12), l'élément optique combiné (8) étant constitué de plusieurs couches (19), et différentes couches (19) comprenant différents composants, une couche présentant le diaphragme émetteur (9) et le diaphragme récepteur (10), et une couche différente de celle-ci présentant le filtre passe-bande (12).

2. Capteur optoélectronique (1) selon la revendication 1,
**caractérisé en ce que** l'élément optique combiné (8) présente au moins un élément optique diffractif (11).

3. Capteur optoélectronique (1) selon la revendication 2,
**caractérisé en ce que** la première lentille (6) ou la deuxième lentille (7) est conçue sous forme d'élément optique diffractif (11).

4. Capteur optoélectronique (1) selon l'une des revendications précédentes, **caractérisé en ce que** l'élément optique combiné (8) forme une vitre avant (13) du capteur optoélectronique (1), la vitre avant (13) faisant partie d'une surface extérieure du boîtier de capteur (2).

5. Capteur optoélectronique (1) selon l'une des revendications précédentes, **caractérisé en ce que** des éléments de positionnement (14) sont disposés entre l'élément optique combiné (8) et l'une au moins des cartes de circuit imprimé (3) afin de positionner et de fixer l'élément optique combiné (8) sur la carte de circuit imprimé ou les cartes de circuit imprimé (3).

6. Capteur optoélectronique (1) selon l'une des revendications précédentes, **caractérisé en ce qu'**un support d'optique (15) est disposé entre l'élément optique combiné (8) et la carte de circuit imprimé (3) afin de positionner et de fixer l'élément optique combiné (8) sur la carte de circuit imprimé (3).

7. Capteur optoélectronique (1) selon l'une des revendications précédentes, **caractérisé en ce que** l'élément optique combiné (8) présente un revêtement anti-reflet, anti-rayures et/ou anti-buée.

8. Capteur optoélectronique (1) selon l'une des revendications précédentes, **caractérisé en ce que** l'élément optique combiné (8) présente des microstructures optiques (16).

9. Capteur optoélectronique (1) selon l'une des revendications précédentes, **caractérisé en ce que** l'élément optique combiné (8) présente des microstructures mécaniques.

10. Capteur optoélectronique (1) selon l'une des revendications précédentes, **caractérisé en ce que** l'élément optique combiné (8) comprend des moyens de séparation optique (17) pour séparer optiquement les voies d'émission et de réception.

11. Capteur optoélectronique (1) selon l'une des revendications précédentes, **caractérisé en ce que** la première lentille (6) et/ou la deuxième lentille (7) sont des lentilles de Fresnel (18).

12. Procédé de fabrication d'un capteur optoélectronique (1) selon la revendication 1,
**caractérisé en ce que** l'élément optique combiné (8) est fabriqué par moulage par injection.

13. Procédé de fabrication d'un capteur optoélectronique (1) selon la revendication 1,
**caractérisé en ce que** l'élément optique combiné (8) est fabriqué par un procédé de lithographie par nano-impression.

14. Procédé selon la revendication 12 ou 13,
**caractérisé en ce que** l'élément optique combiné (8) est ajusté et aligné par rapport à la carte de circuit imprimé (3) grâce à une représentation de la lumière d'émission.

15. Procédé selon la revendication 12 ou 13,
**caractérisé en ce qu'**une pluralité d'éléments optiques combinés (8) sont fabriqués dans un substrat unique et sont ensuite individualisés.

16. Procédé selon la revendication 15,
**caractérisé en ce que** l'individualisation est réalisée par un procédé de séparation au laser.

17. Procédé selon la revendication 15,
**caractérisé en ce que** le substrat se présente sous la forme d'un CD, d'un DVD, d'un disque Blu-ray ou d'un disque ultra-haute définition.
